# EUROPÄISCHE PATENTSCHRIFT

(11) **EP 3 109 524 B1**
(45) Veröffentlichungstag und Bekanntmachung des Hinweises auf die Patenterteilung: **09.05.2018**
(21) Anmeldenummer: 16001281.1
(22) Anmeldetag: 07.06.2016
(51) Int. Cl.: F16K 27/02, F16K 27/07, B61D 7/02

(54) **BODENVENTIL FÜR EINEN KESSELWAGEN**
FLOOR VALVE FOR A TANK VEHICLE
CLAPET DE DRAINAGE POUR UN WAGON-CITERNE

(30) Priorität: 26.06.2015 DE 202015103372 U
(43) Veröffentlichungstag der Anmeldung: 28.12.2016
(73) Patentinhaber: Waggonbau Graaff GmbH, 31008 Elze (DE)
(72) Erfinder: Pana, Constantin, 31008 Elze (DE)
(74) Vertreter: Bremer, Ulrich

(56) Entgegenhaltungen:
- FR-A5- 2 127 707
- GB-A- 522 176
- US-A- 2 212 370
- US-A- 3 145 968

## Beschreibung

Die Erfindung betrifft ein Bodenventil für einen Kesselwagen entsprechen den Merkmalen des Oberbegriffes des ersten Patentanspruches.

Das Bodenventil für Kesselwagen ist überall dort einsetzbar wo ein Medium, welches in einem Kesselwagen transportiert wir nach unten und in der Regel an der tiefsten Stelle des Kesselwagens aus diesem entfernt werden soll.

Für Ventile an Kesselwagen sind unterschiedliche Lösungen bekannt.

EP 2 826 692 A2 beschreibt ein Zwangsbelüftungs- und Vakuum-Sicherheitsventil für einen Tank für die Beförderung gefährlicher Güter, bestehend aus einem gegossenen Gehäuse mit einem Rohr für einen Anschluss für eine Gaspendelleitung und eine untere Öffnung am Gehäuse einem Anschlussflansch im Gehäuse für Befestigungen am Tank, einem Ventilteller zum Verschließen der unteren Öffnung mit einem Schaft in einer Führung im Gehäuse, einer Feder zwischen einem verstellbaren Druckstück und einer Innenseite des Gehäuses einem Halter am Gehäuse und einem Steg am Ventilteller. Zwangsentlüftungsventile sind am Tank oben angeordnet und dienen dem Auslass eines Gases bei Überdruck. Bodenventile dienen dem Auslass eine Flüssigkeit.

In www.tkguard.com ist ein für diese Aufgabe geeignetes Bodenventil beschrieben, welches aus einem Gehäuse, einem Ventilteller, einer Betätigung, einer Ventilspindel, einer Feder und einem Deckel besteht. Bei einem Bruch der Feder verliert bei diesem Ventil die Ventilstange die Führung und kann den Ventilteller nicht mehr in die vorgegebene Richtung führen. Eine einfache Montage und Demontage der Feder in dieser Vorrichtung, insbesondere bei Auswechseln des Kopfes der die Ventilstange in ihrem oberen Bereich hält ist nicht möglich.

DE 2930204 A1 beschreibt ein schnellschließendes Ventil mit einem Gehäuse, einem Einlass und einem Auslass sowie einer Ventilsteuerung, indem eine Feder eingeordnet ist, wobei bei einem Federbruch ein erheblicher Aufwand entsteht, um die Feder zu wechseln.

US 2 212 370 A offenbart ein Bodenventil für einen Kesselwagen bestehend aus einem Gehäuse an einem Flansch, einem Verteiler, einer Betätigung, einer Öffnung für ein Medium, einem Ventilteller, einer Feder, einer Verschlussöffnung und einem Deckel, mit einem Deckel mit einer Führung für die Ventilspindel und einer Führung zum Gehäuse und einem Schnellverschluss zwischen dem Gehäuse und dem Deckel, wobei der Schnellverschluss aus Rastnasen am Deckel und Öffnungen an Halterungen am Gehäuse besteht. Die Führung für die Ventilspindel erstreckt sich allerdings nicht entlang der Ventilspindel. Die Länge der Führung zum Gehäuse ist auch nicht größer als der Weg des Ventiltellers beim vollständigen Öffnen der Verschlussöffnung.

Weiterhin dienen als Schnellverschluss drei von Hand umzulegende Hebel, die in Aussparungen im Gehäuse hineinragen, was eine aufwendige Fertigung voraussetzt.

GB 522 176 A offenbart ein gattungsgemäßes Bodenventil für einen Kesselwagen mit einem Schnellverschluss bei dem der Deckel mittels einer Schraubverbindung mit Feder festgehalten und verspannt wird, was einen erhöhten Fertigungsaufwand voraussetzt und ein einfaches Öffnen beim Bruch einer Feder nicht erlaubt.

Es ist deshalb Aufgabe der Erfindung ein Bodenventil für einen Kesselwagen zu entwickeln, bei dem das Auswechseln der Feder mit geringem Aufwand erfolgen kann und bei dem nach einem Federbruch der Ventilteller seine Lage weitestgehend behält.

Diese Aufgabe wird durch ein Ventil nach den kennzeichnenden Merkmalen des ersten Patentanspruches gelöst.

Unteransprüche geben vorteilhafte Lösungen der Erfindung wider.

Die erfindungsgemäße Lösung sieht ein Bodenventil für einen Kesselwagen vor, welches aus einem Gehäuse an einem Flansch, einem Verteiler, einer Betätigung, einer Öffnung für ein Medium, einem Ventilteller, einer Feder, einer Verschlussöffnung und einem Deckel besteht.

Das Ventil wird mit seiner Öffnung für das Medium nach unten mittels Flansch dicht an den Tank oder Kesselwagen montiert. Die Montage kann Stoff- oder kraftschlüssig erfolgen. Das kann mittels schweißen, löten oder über eine Schraubverbindung erfolgen. Als Medium sind Flüssigkeiten denkbar, die in einem Kesselwagen transportiert werden.

Das erfindungsgemäße Ventil sieht einen Deckel in etwa in der Form eines zylindrischen Hutes vor. Dieser weist eine Führung für die Ventilspindel im inneren des Deckels auf und eine Führung zum Gehäuse. Die Führung für die Ventilspindel kann eine runde zylinderförmige Führung darstellen, die eine Spielpassung um die Spindel aufweist. Die Führung am Gehäuse kann eine Zylinderform im unteren Bereich des Deckels darstellen, die geführt im Gehäuse nach unten, das heißt in Richtung auf den Ventilteller, gleiten kann.

Die Feder, wie eine Spiralfeder, ist zwischen einem Federteller an der Ventilspindel und dem oberen Teil des Deckels angeordnet und zwischen diesen beiden Teilen verspannt.

Bei einem Bruch der Feder wird der Deckel nicht mehr in seiner Lage gehalten und gleitet in Richtung auf den Ventilteller. Die Führung des Deckels auf der Seite des Gehäuses kann ein Führungsring darstellen oder mehrere, mindestens zwei Halterungen, die den Deckel führen und halten.

Die Länge der Führung zum Gehäuse, von ihrem unteren bis zu ihrem oberen Umfang, ist größer als der Weg des Ventiltellers von einem vollständigen Schließen der Verschlussöffnung bis zu einem vollständigen Öffnen der Verschlussöffnung des Ventils. Durch diese Anordnung wird verhindert, dass bei einem Bruch der Feder die Ventilspinde ihre Führung durch den Deckel verliert.

Dieser wird durch seine Führung immer parallel zur Ventilspindel und zum Gehäuse geführt.

Weiterhin sieht die Erfindung einen Schnellverschluss zwischen dem Gehäuse und dem Deckel vor.

Der Schnellverschluss besteht in einer bevorzugten Ausführungsform aus Rastnasen am unteren Ende oder Bereich des Deckels, die in Öffnungen in einer Halterung am Gehäuse eingreifen.

Das untere Ende des Deckels weist an mehreren Stellen, vorzugsweise an drei Stellen, nach außen ragende Kreissegmente auf, auf denen die Rastnasen angeordnet sind. Die Länge der Kreissegmente entsprechen in etwa der Länge der Halterungen des Gehäuses. Im Idealfall sind die Halterungen des Gehäuses und des Deckels deckungsgleich.

Vorteilhaft ist es, wenn der Schnellverschluss aus drei Rastnasen am Deckel und drei Öffnungen an drei Halterungen am Gehäuse besteht. Bei den Öffnungen kann es sich um Langlöcher handeln, die auf einer Kreislinie angeordnet sind. Die drei Halterungen weisen die Länge von Kreissegmenten auf. Die Länge eines jeden Kreissegmentes der Halterung ist kleiner als der Abstand der Halterungen zueinander.

Eine weitere vorteilhaft Ausgestaltung der Erfindung sieht vor, dass der Deckel aus einem oberen Teil und einer Führung gegenüber der Halterungen besteht, wobei der obere Teil und die Führung durch Stege, beispielsweise drei Stege miteinander verbunden sind.

Weiterhin ist es vorteilhaft, wenn das Gehäuse aus einem oberen und einem unteren Teil besteht, die durch Stege, beispielsweise drei Stege, miteinander verbunden sind.

Bei einem Bruch der Feder bei Überlastung gleitet der Deckel auf der Ventilspindel und an seiner Führung gegenüber der Halterung in Richtung auf den Ventilteller nach unten, ohne dass dieser seine Führung verliert und seine Lage ändert. Der Schnellverschluss ermöglicht es in dieser Stellung, dass der Deckel gegenüber dem Gehäuse verdreht wird, bis die Rastnasen den Öffnungen nicht mehr gegenüberliegen und die Kreissegmente des Deckels zwischen den Kreissegmenten der Halterungen liegen und zwischen diesen entlang der Ventilspindel herausgezogen werden können. Nach einem Wechsel der Feder wird der Deckel entlang der Ventilspindel in Richtung auf den Ventilteller gegen den Widerstand der Feder gedrückt, wobei die Kreissegmente zwischen den Halterungen soweit nach unten gleiten, bis sie unter den Halterungen verdrehbar sind. Dann wird der Deckel so verdreht, dass die Rastnasen des Deckels den Öffnungen der Halterungen gegenüberliegen. Danach können die Rastnasen durch die Federkraft in die Öffnungen der Halterungen gleiten und die Feder gespannt halten.

Die erfindungsgemäße Lösung hat den Vorteil, dass bei einem Bruch der Feder die Ventilspindel und damit der Ventilteller ihre Führung nicht verlieren und die Feder nach einem Bruch mit geringem Montageaufwand ausgewechselt werden kann.

Im Folgenden wird die Erfindung an einem Ausführungsbeispiel und vier Figuren erläutert.

Die Figuren zeigen:
- Fig. 1: Erfingungsgemäßes Ventil im Schnitt;
- Fig. 2: Detail Ventileinsatz in perspektivischer Darstellung;
- Fig. 3: Ventileinsatz von Figur 2 im Schnitt;
- Fig. 4: Ventil im Schnitt in geöffneter Stellung des Ventiltellers.

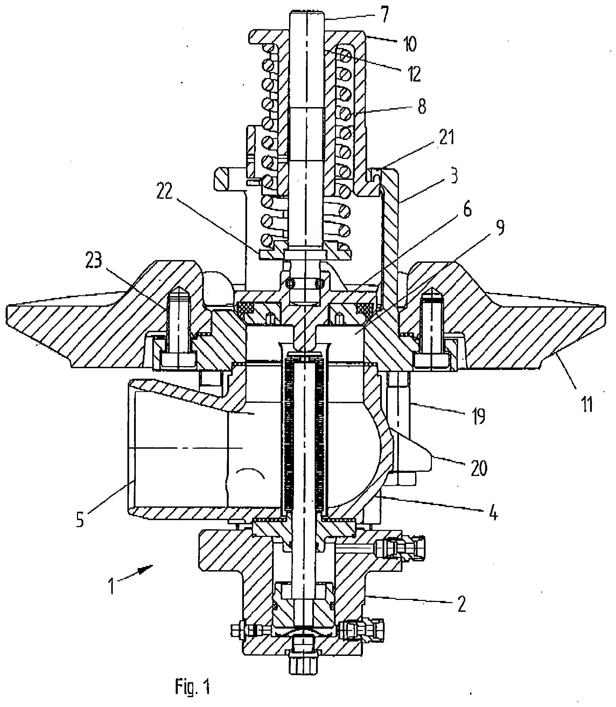

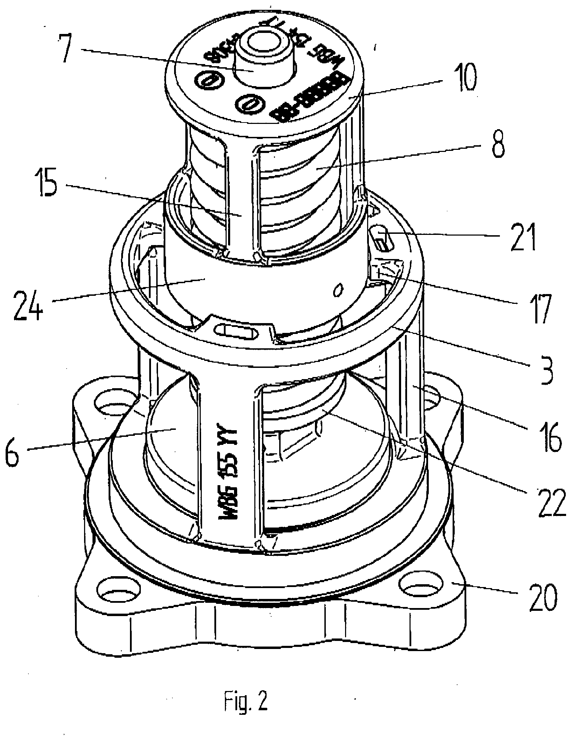

Die Figur 1 zeigt das Bodenventil 1 für einen Kesselwagen das in der gezeigten Richtung in eine untere Öffnung des Kessels montiert wird. Das Ventil 1 besteht aus einem Gehäuse 3 an einem Flansch 11 und ist mit diesem über Schrauben 23 verbunden. In seinem unteren Bereich weist das Ventil 1 einem Verteiler 4 auf durch den die Flüssigkeit das Ventil 1 in Richtung auf die Öffnung 5 über den Verteiler 4 verlässt. Die Öffnung 5 stellt einen Auslass quer zur Achse der Ventilspindel 7 dar. Die Öffnung 5 ist zwischen dem Flansch 11 und der Betätigung 2 angeordnet. Die Betätigung 2 ermöglicht das Öffnen und Schließen des Ventils 1 indem der Ventilteller 6 gegen oder mit der Kraft der Feder 8 in oder aus der Verschlussöffnung 9 bewegt wird. Die Feder 8 ist zwischen dem Federteller 22 und dem Deckel 10 gespannt und drückt diesen gegen Halterung 17 (siehe auch Figur 2) des Gehäuses 3.

Der Deckel 10 weist eine zylindrische Form mit eine oberen Begrenzung und einer Führung 12 für die Ventilspindel 7 auf. Weiterhin weist der Deckel 10 eine Führung 23 zum Gehäuse 3 auf. Für die Befestigung des Gehäuses 3 am Flansch 11 sind Schrauben 24 angeordnet.

Die Figur 2 zeigt den Ventileisatz in perspektivischer Darstellung. In dieser Darstellung ist zu sehen wie die Führung 24 des Deckels 10 zwischen drei Halterungen 17 des Gehäuses 3 gehalten wird und sich zwischen ihnen bei einem Bruch der Feder 8 parallel zur Spindel 7 nach unten bewegen kann. Weiterhin zeigt die Figur 2 die Stege 15 zwischen dem oberen Teil des Deckels10 und der Führung 24 in den Halterungen 17 mit den Öffnungen 21. Auch das Gehäuse 3 weist Stege 16 auf. Im unteren Teil des Gehäuses 3 sind Ohrenr 20 mit Öffnungen für Schrauben19 zum Befestigen angeordnet. Die Figur 2 zeigt weiterhin, das die Abstände zwischen den Halterungen 17 größer sind als die Länge der Kreissegmente von der jeweils einen Seite einer Halterung 17 zur jeweils anderen Seite der Halterung 17. Die Feder 8 ist zwischen Federteller 22 und Deckel 10 gespannt und drückt diesen von unten gegen die Halterung17.

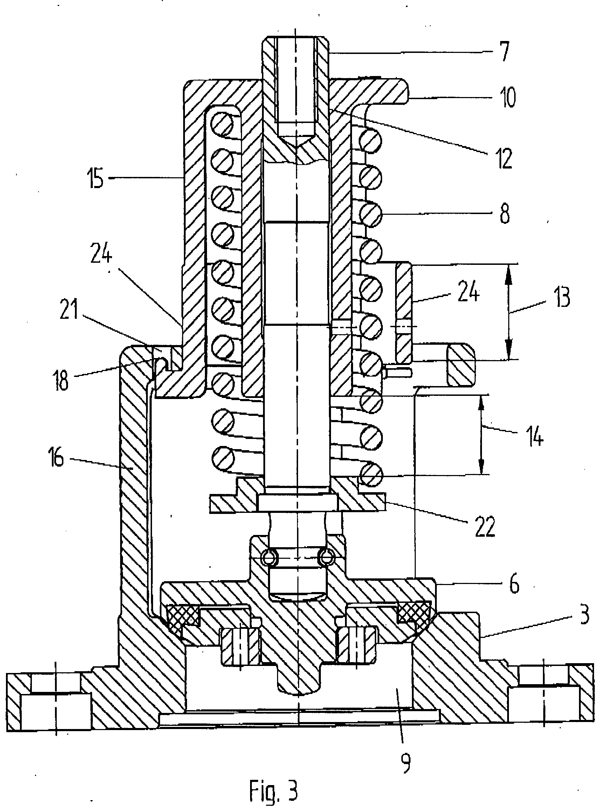

Wie Figur 3 in einer Schnittdarstellung durch den oberen Teil des Bodenventils zeigt, ist die Länge 13 der Führung 24 des Deckels 10 größer ist als der Weg 14 des Ventiltellers 6 von einer geschlossenen Stellung bis zum vollständigen Öffnen der Verschlussöffnung 9.

Dadurch wird verhindert, dass die Ventilspindel 7 ihre Führung bei einem Bruch der Feder 8 verliert.

Als Schnellverschluss zwischen dem Gehäuse 3 und dem Deckel 10 für ein einfaches Wechseln der inneren Teile (Ventilteller 6, Dichtung, Feder 8) sind Rastnasen 18 nahe der Führung 24 angeordnet, die in Öffnungen 21 der Halterung 17 des Gehäuses 3 eingreifen. Die Rastnasen 18 sind parallel zum Steg 15 und zu diesem beabstandet angeordnet. Dieser Schnellverschluss funktionier in der Weise, das der Deckel 10 geführt in den Halterungen 17 und auf der Ventilspindel 7 gegen die Kraft der Feder 8 auf der Spindel 7 nach unten gedrückt wird. Die Ventilspindel 7 weist eine Führung 12 im Deckel 10 auf. Die Rastnasen 18 des Deckels 10 befinden sich von oben gesehen zwischen und unterhalb der Halterungen 17. In dieser Lage wird der Deckel 10 so weit verdreht, bis sich die Rastnasen 18 unter den Öffnungen 21 der Halterrungen 17 befinden. Danach können die Rastnasen 18 durch die Kraft der Feder 8 in die Öffnungen 21 der Halterungen 17 einrasten.

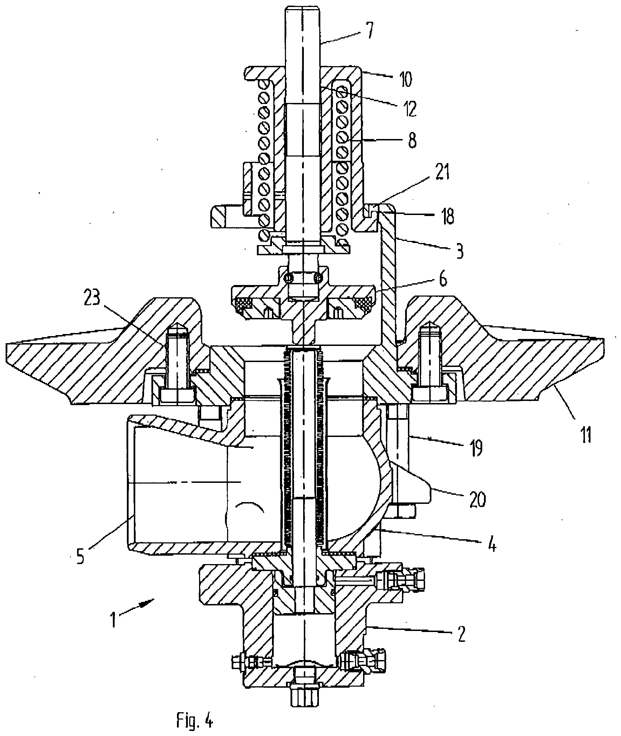

Bei einem Bedienen der Betätigung 2 am Ventil 1 wird des der Ventilteller 6 gegen die Kraft der Feder 8 gegen den Deckel 10 nach oben gedrückt, so dass die Verschlussöffnung 9 freigegeben wird und die Flüssigkeit den Kessel durch die Öffnung 5 verlassen kann. Diese Stellung des Ventils 1 ist in Figur 4 dargestellt.

### Liste der verwendeten Bezugszeichen

- 1: Bodenventil
- 2: Betätigung
- 3: Gehäuse
- 4: Verteiler
- 5: Öffnung in Verteiler
- 6: Ventilteller
- 7: Ventilspindel
- 8: Feder
- 9: Verschlussöffnung
- 10: Deckel
- 11: Flansch (Blockflansch)
- 12: Führung für die Ventilspindel 7
- 13: Länge der Führung 26
- 14: Hub bei Öffnung des Ventiltellers 6
- 15: Steg des Deckels 10
- 16: Steg des Gehäuses 3
- 17: Halterung für den Deckel 3
- 18: Rastnase des Deckels
- 19: Schraube
- 20: Ohren mit Öffnungen für die Befestigung am Flansch 11
- 21: Öffnung in 17
- 22: Federteller für die Feder 8 an der Ventilspindel 7
- 23: Schraube
- 24: Führung am Deckel 10 zum Gehäuse 3

## Patentansprüche

1. Bodenventil (1) für einen Kesselwagen, bestehend aus einem Gehäuse (3) an einem Flansch (11), einem Verteiler (4), einer Betätigung (2), einer Öffnung (5) für ein Medium, einem Ventilteller (7), einer Feder (8), einer Verschlussöffnung (9), einem Federteller (22) und einem Deckel (10) mit einer Führung (12) für die Ventilspindel (7) und eine Führung (24) zum Gehäuse (3), einen Schnellverschluss zwischen dem Gehäuse (3) und dem Deckel (10), wobei der Schnellverschluss aus Rastnasen (18) am Deckel und Öffnungen (21) an Halterungen (17) am Gehäuse (3) besteht, **dadurch gekennzeichnet, dass**
die Länge (13) der Führung (24) zum Gehäuse (3) größer ist als der Weg (14) des Ventiltellers (6) beim vollständigen Öffnen der Verschlussöffnung,
die Feder (8) die Rastnasen (18) des verdrehbaren Deckels (10) in den Öffnungen (21) an den Halterungen (17) verspannt, wobei die Feder (8) zwischen verdrehbarem Deckel (10) und dem Federteller (22) an der Ventilspindel (7) (22) wirkt und
ein Öffnen des Schnellverschlusses durch ein Zusammendrücken der Feder (8) und ein Verdrehen des Deckels (10) gegenüber den Halterungen (17) erfolgt.

2. Vorrichtung nach Anspruch 1, **dadurch gekennzeichnet, dass** die Öffnungen (21) an den Halterungen (17) Langlöcher darstellen.

3. Vorrichtung nach einem der Ansprüche 1 bis 2, **dadurch gekennzeichnet, dass** der Schnellverschluss aus drei Rastnasen (18) am Deckel (10) in drei Öffnungen (21) in drei Halterungen (17) des Gehäuses (3) besteht.

4. Vorrichtung nach einem der Ansprüche 1 bis 3, **dadurch gekennzeichnet, dass** die Länge des Kreissegmentes der Halterungen (17) am Gehäuse (3) kleiner ist als der Abstand der Halterungen (17) zueinander.

5. Vorrichtung nach einem der Ansprüche 1 bis 4, **dadurch gekennzeichnet, dass** der Deckel (10) aus einem oberen Teil und einer Führung (24) gegenüber der Halterung (17) besteht wobei der obere Teil und die Führung (17) durch Stege(15) miteinander verbunden sind.

6. Vorrichtung nach einem der Ansprüche 1 bis 5, **dadurch gekennzeichnet, dass** das Gehäuse (3) aus einem oberen und einem unteren Teil besteht, die durch Stege (16) miteinander verbunden sind.

7. Vorrichtung nach einem der Ansprüche 1 bis 6, **dadurch gekennzeichnet, dass** die Länge des Kreissegmentes der Halterung (17) kleiner gleich der Länge des Kreissegmentes des Deckels (10) ist, auf dem sich die Rastnase (18) befindet.

## Claims

1. Bottom valve (1) for a tank vehicle, comprising a housing (3) on a flange (11), a distributor (4), a control device (2), an opening (5) for a medium, a valve disc (7), a spring (8), a locking aperture (9), a spring plate (22) and a cover (10) having a guide (12) for the valve spindle (7) and a guide (24) in relation to the housing (3), a quick fastener between the housing (3) and the cover (10), wherein the quick fastener comprises latching lugs (18) on the cover and openings (21) on supports (17) on the housing (3), **characterised in that**
the length (13) of the guide (24) in relation to the housing (3) is greater than the path (14) of the valve disc (6) when the locking aperture is completely open, the spring (8) tensions the latching lugs (18) of the rotatable cover (10) in the openings (21) on the supports (17), wherein the spring (8) acts between the rotatable cover (10) and the spring plate (22) on the valve spindle (7), and the quick fastener opens as a result of compression of the spring (8) and rotation of the cover (10) with respect to the supports (17).

2. Device according to claim 1, **characterised in that** the openings (21) are slots on the supports (17).

3. Device according to any one of claims1 or 2, **characterised in that** the quick fastener comprises three latching lugs (18) on the cover (10) in three openings (21) in three supports (17) of the housing (3).

4. Device according to any one of claims 1 to 3, **characterised in that** the length of the segment of a circle of the supports (17) on the housing (3) is shorter than the spacing of the supports (17) from each other.

5. Device according to any one of claims 1 to 4, **characterised in that** the cover (10) comprises an upper part and a guide (24) in relation to the support (17), wherein the upper part and the guide (17) are joined together by webs (15).

6. Device according to any one of claims 1 to 5, **characterised in that** the housing (3) comprises an upper part and a lower part, which are joined together by webs (16).

7. Device according to any one of claims 1 to 6, **characterised in that** the length of the segment of a circle of the support (17) is shorter than or equal to the length of the segment of a circle of the cover (10) on which the latching lug (18) is located.

## Revendications

1. Clapet de fond (1) pour un wagon-citerne, le clapet de fond étant constitué par un boîtier (3) sur une bride (11), un distributeur (4), un dispositif d'actionnement (2), une ouverture (5) pour un milieu, un disque de clapet (7), un ressort (8), une ouverture d'obturateur (9), une coupelle de ressort (22) et un couvercle (10) avec un dispositif de guidage (12) pour la tige de clapet (7) et un dispositif de guidage (24) vers le boîtier (3), une fermeture rapide entre le boîtier (3) et le couvercle (10), la fermeture rapide étant constituée par des becs d'encliquetage (18) sur le couvercle et d'ouvertures (21) dans des supports (17) sur le boîtier (3), **caractérisé en ce que** la longueur (13) du dispositif de guidage (2) vers le boîtier (3) est supérieure au trajet (14) du disque de clapet (6) lors de l'ouverture intégrale de l'obturateur et **en ce que** le ressort (8) serre les becs d'encliquetage (18) du couvercle tournant (10) dans les ouvertures (21) dans les supports (17), le ressort (8) agissant entre le couvercle tournant (10) et la coupelle de ressort (22) sur la tige de clapet (7), ce qui entraîne une ouverture de la fermeture rapide par compression du ressort (8) et rotation du couvercle (10) par rapport aux supports (17).

2. Dispositif suivant la revendication 1, **caractérisé en ce que** les ouvertures (21) dans les supports (17) sont des trous oblongs.

3. Dispositif suivant une des revendications 1 à 2, **caractérisé en ce que** la fermeture rapide est constituée par trois becs d'encliquetage (18) sur le couvercle (10) dans trois ouvertures (21) dans trois supports (17) du boîtier (3).

4. Dispositif suivant une des revendications 1 à 3, **caractérisé en ce que** la longueur du segment circulaire des supports (17) sur le boîtier (3) est inférieure à l'écart des supports (17) l'un par rapport à l'autre.

5. Dispositif suivant une des revendications 1 à 4, **caractérisé en ce que** le couvercle (10) est constitué par une partie supérieure et un dispositif de guidage (24) par rapport au support (17), la partie supérieure et le dispositif de guidage (17) étant reliés l'un à l'autre par des ponts (15).

6. Dispositif suivant une des revendications 1 à 5, **caractérisé en ce que** le boîtier (3) est constitué par une partie supérieure et une partie inférieure qui sont reliées entre elles par des ponts (16).

7. Dispositif suivant une des revendications 1 à 6, **caractérisé en ce que** la longueur du segment circulaire du support (17) est inférieure ou égale à la longueur du segment circulaire du couvercle (10), sur lequel se situe le bec d'encliquetage (18).
